# EUROPEAN PATENT APPLICATION

(11) **EP 3 962 098 A1**
(43) Date of publication of application: **02.03.2022**
(21) Application number: 20795389.4
(22) Date of filing: 24.03.2020
(51) Int. Cl.: H04R 1/02, F16F 15/04, F16F 15/08, G10K 11/16

(54) **DAMPING MEMBER**

(30) Priority: 26.04.2019 JP 2019085591
(71) Applicant: YAMAHA CORPORATION, Hamamatsu-shi Shizuoka, 430-8650 (JP)
(72) Inventor: MIKI Akira, Hamamatsu-shi, Shizuoka 430-8650 (JP); OKADA Yuko, Hamamatsu-shi, Shizuoka 430-8650 (JP); MORITA Koichi, Hamamatsu-shi, Shizuoka 430-8650 (JP)
(74) Representative: Klang, Alexander H.
(86) International application number: PCT/JP2020/013037
(87) International publication number: WO 2020/217818

(57) **Abstract**

The object is to provide a vibration damping member with a simple structure and easily mountable on a housing.

A vibration damping member 100A mounted to an inside of a housing of an acoustic device includes a first member 101, a second member 102, and a third member 103, in which the first member 101 and the second member 102 are connected through the third member 103. The third member 103 has a lower elastic modulus than the first member 101 and the second member 102.

## Description

### TECHNICAL FIELD

The disclosure relates to a vibration damping member suppressing vibration generated in a housing of an acoustic device.

### BACKGROUND ART

There has been known, in an acoustic device such as a speaker, that vibration is generated in a housing due to effects of mechanical vibration by the speaker and sound pressure inside the housing and the vibration is emitted from the acoustic device as noise, which deteriorates sound quality of reproduced sound. Accordingly, there exists an acoustic device in which a vibration damping material is provided as a means for suppressing vibration in the housing and the vibration damping material is deformed by propagated vibration to absorb vibration, thereby damping vibration in the housing.

In a technique disclosed in Patent Literature 1 (JP-UM-A-55-29819), a bar-shaped reinforcing member is provided between walls facing each other in a speaker cabinet. Here, one end of the reinforcing member is fixed to the wall by a flanged ring. More specifically, a ring portion of the flanged ring is inserted into an opening provided on the wall, a flange portion is screwed to the wall, and one end of the reinforcing material is inserted into an opening opened in the ring portion. A vibration damping material is interposed between an inner circumferential surface of the opening of the ring portion and an outer circumferential surface of an end portion the reinforcing member. Shearing deformation occurs in the vibration damping material due to vibration generated in the wall of the speaker cabinet. The vibration of the wall is absorbed by occurrence of the shearing deformation.

### PRIOR ART DOCUMENTS

### PATENT DOCUMENTS

Patent Document 1: JP-UM-A-55-29819

### SUMMARY OF THE INVENTION

### PROBLEM TO BE SOLVED BY THE INVENTION

In the technique disclosed in Patent Literature 1, it is necessary to provide the opening for mounting the flanged ring on the wall of the housing due to the use of the flanged ring. It is also necessary to fix the flanged ring on the wall by screwing.

The present disclosure has been made in view of the above explained circumstances, and an object thereof is to provide a vibration damping member with a simple structure and easily mountable to the housing.

### MEANS FOR SOLVING PROBLEM

The disclosure provides a vibration damping member mounted to an inside of a housing of an acoustic device, which includes a first member, a second member, and a third member, in which the first member and the second member are connected through the third member, and the third member has a lower elastic modulus than the first member and the second member.

The disclosure also provides an acoustic device including a housing, a speaker unit fixed to the housing, and a vibration damping member mounted to an inside of the housing, in which the housing includes a first wall and a second wall different from the first wall which are walls defining the inside of the housing, and the vibration damping member includes a first member being in contact with the first wall, a second member being in contact with the second wall, and a third member connecting the first member and the second member and having a lower elastic modulus than the first member and the second member.

### BRIEF DESCRIPTION OF THE DRAWINGS

Fig. 1 is a cross-sectional view illustrating a structure of a speaker in which a vibration damping member according to a first embodiment of the disclosure is mounted to a housing;
Fig. 2 is a cross-sectional view of the vibration damping member;
Fig. 3 is a cross-sectional view taken along III-III' line of Fig. 2;
Fig. 4 is a cross-sectional view illustrating a structure of a vibration damping member according to a second embodiment of the disclosure;
Fig. 5 is a cross-sectional view illustrating a structure of a vibration damping member according to a third embodiment of the disclosure;
Fig. 6 is a cross-sectional view illustrating a structure of a vibration damping member according to another embodiment of the disclosure;
Fig. 7 is a cross-sectional view illustrating a structure of a vibration damping member according to another embodiment of the disclosure;
Fig. 8 is a cross-sectional view illustrating a structure of a vibration damping member according to another embodiment of the disclosure;
Fig. 9 is a cross-sectional view illustrating a structure of a vibration damping member according to another embodiment of the disclosure; and
Fig. 10 is a cross-sectional view illustrating a structure of a speaker in which a vibration damping member according to another embodiment of the disclosure is mounted to the housing.

### EMBODIMENTS FOR IMPLEMENTING THE INVENTION

Hereinafter, embodiments of the present disclosure will be explained with reference to the drawings.

### <First Embodiment>

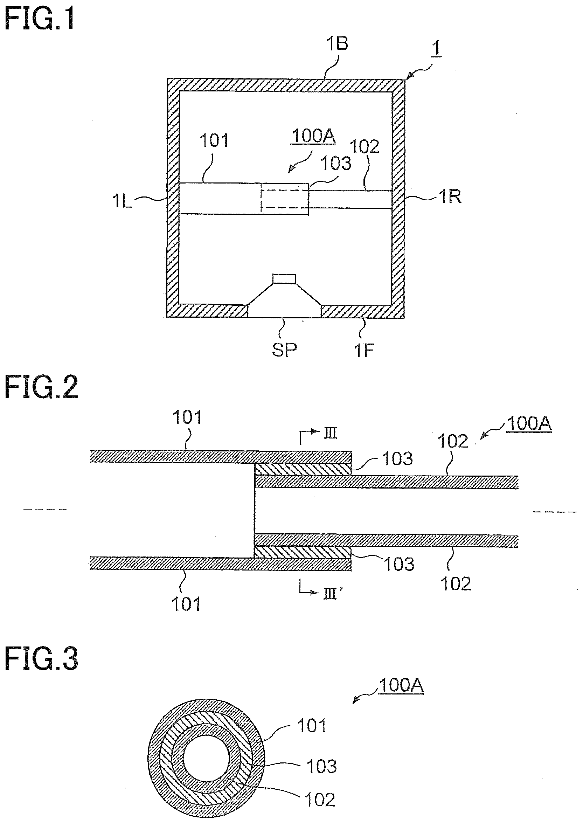

Fig. 1 is a cross-sectional view illustrating a structure of a speaker in which a vibration damping member 100A according to a first embodiment of the disclosure is mounted to a housing 1. In Fig. 1, the housing 1 is a rectangular parallelepiped housing surrounded by a front face wall 1F on which a speaker unit SP is provided, a back face wall 1B, a left face wall 1L, a right face wall 1R, and a not-illustrated floor face wall and ceiling face wall. The vibration damping member 100A according to the embodiment is an approximately bar-shaped member as a whole, which is fixed to an inside of the housing 1 in a state in which both ends are respectively in contact with approximately the center of the left face wall 1L and approximately the center of the right face wall 1R and in a state of being sandwiched between the left face wall 1L and the right face wall 1R. The vibration damping member 100A may be fixed to the left face wall 1L and the right face wall 1R at both ends by an adhesive, and may be fixed thereto by a contact pressure to the left face wall 1L and the right face wall 1R. The vibration damping member 100A is preferably formed so that both ends are respectively in contact with a pair of walls facing each other in a plurality of walls that define the inside of the housing 1 as illustrated in Fig. 1. Accordingly, a later-described first member 101 is allowed to come into contact with the left face wall 1L and a later-described second member 102 is allowed to come into contact with the right face wall 1R. However, the structure is not limited to this. For example, it is also preferable that the first member 101 is allowed to come into contact with the front face wall 1F and the second member 102 is allowed to come into contact with the back face wall 1B.

Fig. 2 is a cross-sectional view in which the vibration damping member 100A is cut by a plane containing a central axis of the vibrating damping member 100A. Fig. 3 is a cross-sectional view taken along III-III' line of Fig. 2. The vibration damping member 100A includes the first member 101, the second member 102, and a third member 103. In an illustrated modification, the first member 101 has a hollow cylindrical shape. The second member 102 has a cylindrical shape with a central axis common to the first member 101 and with an outer diameter shorter than an inner diameter of the first member 101. A portion close to one end of the second member 102 is inserted into a hollow area of the first member 101. Then, an end portion of the first member 101 on the opposite side of the second member 102 is in contact with the left face wall 1L, and an end portion of the second member 102 on the opposite side of the first member 101 is in contact with the right face wall 1R. The third member 103 has a cylindrical shape filling a gap between the first member 101 and the second member 102 at a portion at which the second member 102 is inserted into the first member 101. An inner wall of the third member 103 is adhered to an outer wall of the second member 102 by an adhesive, and an outer wall of the third member 103 is adhered to an inner wall of the first member 101 by an adhesive. Fixing of the third member is not limited to fixing by the adhesive, and it is also preferable that the third member is fixed by a pressure generated by deformation of the third member. The first member 101 and the second member 102 are connected through the third member 103 as described above, forming an approximately bar-shaped integrated body as a whole. The first member 101 and the second member 102 respectively include a first facing area and a second facing area that face each other, namely, an inner wall surface (first facing area) of a portion of the first member 101 receiving the second member 102 and an outer wall surface (second facing area) of a portion of the second member 102 inserted into the first member 101, and the third member 103 having the cylindrical shape is disposed at a gap between the first facing area and the second facing area.

In the embodiment, a force generated by vibration of the housing 1 is transmitted to the third member 103 through the left face wall 1L and the first member 101 and is transmitted to the third member 103 through the right face wall 1R and the second member 102, thereby causing shearing deformation in the third member 103 and absorbing vibration energy by the third member 103 to damp the vibration of the housing 1. That is, the third member 103 connects the first member 101 and the second member 102 so as to allow a distance between the left face wall 1L with which the first member 101 is in contact and the right face wall 1R with which the second member 102 is in contact to change when the speaker unit SP operates and the housing 1 vibrates.

It is necessary that the first member 101 and the second member 102 transmit forces from the left face wall 1L and the right face wall 1R to the third member 103. Therefore, the first member 101 and the second member 102 are required to be a material with a higher elastic modulus than at least the third member 103, ideally, they are preferably rigid bodies. In the embodiment, the first member 101 and the second member 102 are formed of metal such as aluminum with high rigidity. The third member 103 is required to have elasticity to cause shearing deformation by the force to be given through the first member 101 and the second member 102 and to return to an original shape, and sufficient viscosity for absorbing vibration energy. Accordingly, a viscoelastic body such as rubber having viscosity and elasticity is used for the third member 103. The viscoelastic body used for the third member 103 may be suitably selected according to a frequency band in which the vibration is desired to be absorbed. For example, the viscoelastic body may be selected so as to correspond to a frequency in a primary vibration mode for absorbing vibration in the primary vibration mode of the housing 1.

According to the embodiment, when vibration is generated in the housing 1, the force generated based on the vibration is transmitted to the third member 103 from the left face wall 1L through the first member 101, and transmitted to the third member 103 from the right face wall 1R through the second member 102. As a result, shearing deformation occurs in the third member 103, thereby absorbing vibration energy and damping the vibration in the housing 1. Specifically, the vibration energy is converted into thermal energy by the third member 103 where the shearing deformation occurs. Therefore, it is possible to suppress noise generated based on vibration of the housing 1 and increase quality of reproduced sound in the speaker according to the embodiment. Note that it is not necessary that the first member 101 and the second member 102 are directly in contact with the left face wall 1L and the right face wall 1R or the first member 101 and the second member 102 may be in contact with the left face wall 1L and the right face wall 1R through another member provided that vibration is sufficiently transmitted from the left face wall 1L and the right face wall 1R to the first member 101 and the second member 102. Moreover, it is possible to apply a contact pressure to the left face wall 1L and the right face wall 1R by restoring force generated by deformation of the third member 103 to support the vibration damping member 100A in the embodiment. Therefore, it is not necessary to provide a hole for mounting the vibration damping member 100A on a wall surface of the housing 1 and not necessary to mount the end portion of the vibration damping member 100A to the hole by the flanged ring, and the vibration damping member 100A can be mounted to the housing 1 by merely sandwiching the vibration damping member 100A between the left face wall 1L and the right face wall 1R. As described above, it is possible to realize the vibration damping member 100A with a simple structure and easily mountable to the housing 1 according to the embodiment.

### <Second Embodiment>

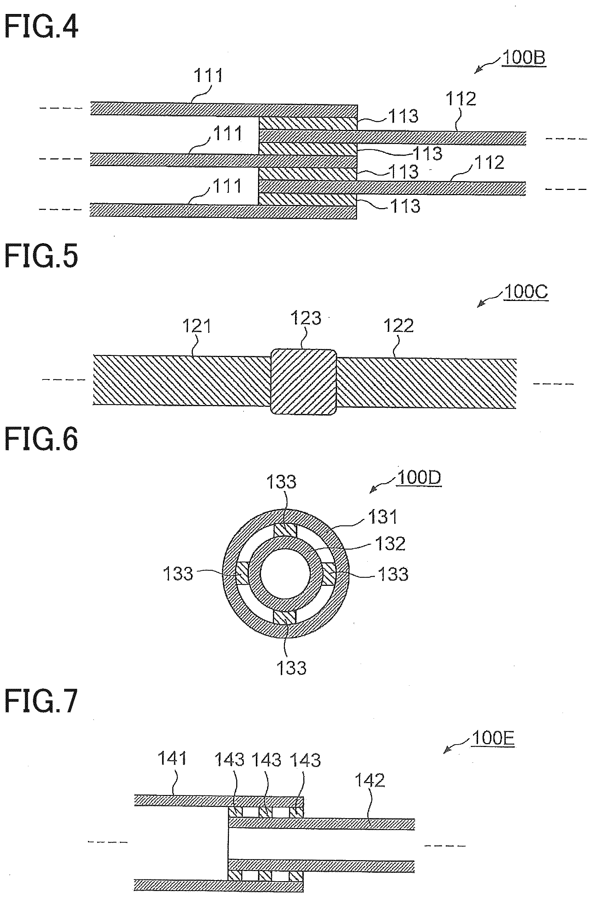

Fig. 4 is a cross-sectional view illustrating a structure of a vibration damping member 100B according to a second embodiment of the present disclosure. The vibration damping member 100B also has an approximately bar shape as a whole in the same manner as the first embodiment, which is mounted to the housing in a state of being sandwiched between two facing wall surfaces of the housing of the speaker or the like.

The vibration damping member 100B includes three plate-shaped first members 111 arranged in parallel and two plate-shaped second members 112 arranged in parallel. Each of two portions close to end portions of the two second members 112 is inserted into a corresponding one of two portions formed between portions close to end portions of adjacent two first members 111 in the three first members 111. The three portions close to the end portions of the first members 111 and the two portions close to the end portions of the second members 112 are alternately arranged at equal intervals. A plate surface close to the end portion of the first member 111 and a plate surface close to the end portion of the second member 112 which are adjacent to each other is a first facing area and a second facing area facing each other, and the plate-shaped third member 113 is sandwiched in a gap between the first facing area and the second facing area.

Also in the embodiment, the first members 111 and the second members 112 are formed of metal such as aluminum with high rigidity and the third members 113 are viscoelastic bodies such as rubber in the same manner as the first embodiment. Also in the embodiment, the same advantages as the first embodiment can be obtained.

### <Third Embodiment>

Fig. 5 is a cross-sectional view illustrating a structure of a vibration damping member 100C according to a third embodiment of the present disclosure. The vibration damping member 100C also has an approximately bar shape as a whole in the same manner as the first and second embodiments, which is mounted to the housing in the state of being sandwiched between two facing wall surfaces of the housing of the speaker or the like.

The vibration damping member 100C includes a first member 121 and a second member 122, each of which with a bar shape and the same central axis, and a third member 123 inserted between end portions of the first member 121 and the second member 122. The first member 121 and the second member 122 are rigid bodies formed of metal such as aluminum in the same manner as the first and second embodiments. Then, the third member 123 is formed of foam rubber.

In the embodiment, a force generated based on vibration of the housing is transmitted to the third member 123 through the first member 121 and the second member 122, which causes compressive/elongation deformation in the third member 123. However, the effect of absorbing vibration energy is generated in the third member 123 formed of foamed rubber also at the time of compressive/elongation deformation. Accordingly, the vibration of the housing can be damped. Therefore, the same advantages as the first and second embodiments can be obtained also in the embodiment.

### <Other Embodiments>

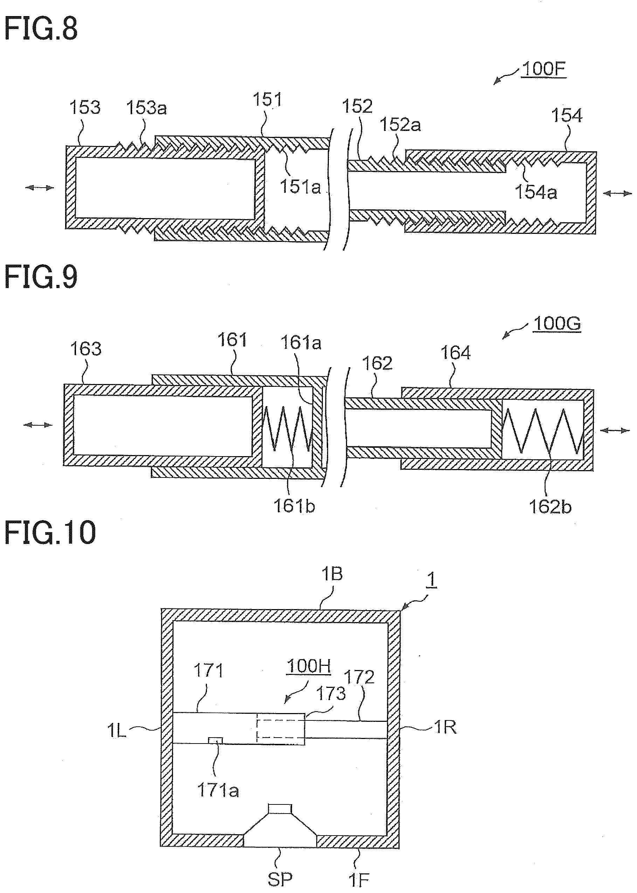

The first to third embodiments of the disclosure have been explained above, and other embodiments can be considered in the disclosure. These embodiments are, for a modification, as follows:
(1) The cylindrical member as the third member 103 having a shape continued in a circumferential direction of the second member 102 is used in the above first embodiment; however, the third member 103 may be divided in the circumferential direction. Fig. 6 is a cross-sectional view illustrating a structure in which a vibration damping member 100D according to the modification is cut by a plane orthogonal to a central axis of a first member 131 and a second member 132. In the vibration damping member 100D, four third members 133 separated in a circumferential direction of the second member 132 are sandwiched between the first member 131 and the second member 132. The number of the third members 133 is an optional, and two or three members as well as five or more members may be used. Also in the modification, the same advantages as the first embodiment can be obtained. Also according to the modification, an amount of shearing deformation occurring in the third member 133 is adjusted by adjusting the number of third members 133 or a width along the circumferential direction of the second member 102, thereby adjusting vibration damping characteristics of the housing.
(2) The third member 103 according to the first embodiment may be divided in a direction along the central axis of the second member 102. Fig. 7 is a cross-sectional view illustrating a structure in which a vibration damping member 100E according to the modification is cut by a plane including a central axis of a first member 141 and a second member 142. In the vibration damping member 100E, three third members 143 separated in a direction of the central axis of the second member 142 are sandwiched between the first member 141 and the second member 142. The number of the third members 143 is an optional, and two members as well as four or more members may be used. Also in the modification, the same advantages as the modification of Fig. 6 can be obtained.
(3) The modification of Fig. 6 and the modification of Fig. 7 may be applied to the second embodiment. That is, the plate-shaped third member 113 in Fig. 4 is divided in a width direction of the first member 111 or the second member 112 (the modification of Fig. 6 is applied) or divided in a longitudinal direction of the first member 111 or the second member 112 (the modification of Fig. 7 is applied). Also in these modifications, the same advantages as the modification of Fig. 6 or the modification of Fig. 7 can be obtained.
(4) It is also preferable that an overall-length adjusting portion that adjusts an overall length of the vibration damping member is provided at at least one of the first member and the second member to thereby make a stretchable vibration damping member. Fig. 8 and Fig. 9 are cross-sectional views of structural modifications of stretchable vibration damping members.

A vibration damping member 100F illustrated in Fig. 8 includes a first member 151 and a second member 152 each having a hollow cylindrical shape with both ends opened. A portion close to an end portion of the second member 152 is inserted into a portion close to an end portion of the first member 151 in the same manner as the first embodiment, and a third member made of rubber or the like is sandwiched between an inner wall surface of the portion close to the end portion of the first member 151 and an outer wall surface of the portion close to the end portion of the second member 152, though not illustrated.

A cylindrical member for extension 153 is inserted into an open end of the first member 151 on the opposite side of the second member 152. Male threads 153a are formed on an outer circumferential surface of the member for extension 153. On the other hand, female threads 151a engaged with the male threads 153a are formed on an inner circumferential surface of the first member 151. An open end of the second member 152 on the opposite side of the first member 151 is inserted into an open end of a cylindrical member for extension 154. Female threads 154a are formed on an inner circumferential surface of the member for extension 154. On the other hand, male threads 152a engaged with the female threads 154a are formed on an outer circumferential surface of the second member 152. That is, in the structure illustrated in Fig. 8, the female threads 151a formed in the first member 151, the member for extension 153, and the male threads 153a thereof are constituting a first overall-length adjusting portion, and the male threads 152a formed in the second member 152, the member for extension 154, and the female threads 154a thereof are constituting a second overall-length adjusting portion. According to the modification, protrusion lengths of the members for extension 153 and 154 with respect to the first member 151 and the second member 152 can be adjusted by rotating the members for extension 153 and 154, thereby adjusting the overall length of the vibration damping member 100F. Therefore, it is possible to mount the vibration damping member 100F to the housing after adjusting the overall length of the vibration damping member 100F so as to correspond to a distance between two facing wall surfaces of the housing according to the modification.

A vibration damping member 100G illustrated in Fig. 9 includes a first member 161 and a second member 162 each having a hollow cylindrical shape. A structure of a connected portion between the first member 161 and the second member 162 is the same as that of the first embodiment, though not illustrated.

An end portion of the first member 161 on the opposite side of the second member 162 is an open end, and a cylindrical member for extension 163 with both ends closed is inserted into the open end. A hollow area inside the first member 161 is blocked by a wall 161a in the middle of the area. Then, a spring 161b is sandwiched between a closed end of the member for extension 163 inserted from the open end of the first member 161 and the wall 161a. On the other hand, an end portion of the second member 162 on the opposite side of the first member 161 is a closed end, and the closed end is inserted from an open end into an inside of a cylindrical member for extension 164 with one end opened and the other end closed. A spring 162b is sandwiched between the closed end of the second member 162 and the closed end of the member for extension 164. That is, the member for extension 163 inserted into the first member 161 and the spring 161b are constituting a first overall-length adjusting portion, and the member for extension 164 into which the second member 162 is inserted and the spring 162b are constituting a second overall-length adjusting portion in the modification illustrated in Fig. 9. According to the modification, an overall length of the vibration damping member 100G can be adjusted by pushing the members for extension 163 and 164 toward the first member 161 and the second member 162. Therefore, the same advantages as the modification of Fig. 8 can be obtained also in the modification.

Means for adjusting the overall length of the vibration damping member are not limited to threads or springs, and the overall length may be adjusted by, for example, oil, air, and so on. The overall-length adjusting portions are provided at both the first member and the second member in Fig. 8 and Fig. 9; however, it is also preferable that the overall-length adjusting portion is provided in only one of the members.

(5) It is also preferable to provide an opening at at least one of the first member 101 and the second member 102 to be used as a resonator in the first embodiment. A vibration damping member 100H illustrated in Fig. 10 includes a first member 171 and a second member 172 each having the hollow cylindrical shape, and a third member 173 connecting the first member 171 and the second member 172 in the same manner as the first embodiment. Here, the first member 171 is provided with an opening 171a allowing a hollow area inside the vibration damping member 100H to communicate with the hollow area inside the housing 1. The hollow area inside the vibration damping member 100H is functioned as the resonator, thereby adjusting acoustic characteristics of the housing 1. According to the modification, suppression of vibration and adjustment of acoustic characteristics of the housing 1 can be executed by one vibration damping member 100H. The opening 171a is provided at the first member 171 in Fig. 10; however, the opening 171a may be provided at the second member 172. Alternatively, it is also preferable to provide openings at both the first member 171 and the second member 172. The number of openings and the position of the opening provided at the vibration damping member 100H are optional, which may be suitably determined according to the shape, size, and desirable acoustic characteristics of the housing 1.

(6) The first member 101 and the second member 102 each have the cylindrical shape in the first embodiment; however, it is also preferable that they have tubular shapes other than the cylindrical shape, such as a square tubular shape.

(7) One vibration damping member is provided between two facing wall surfaces of the housing in Fig. 1; however, a plurality of vibration damping members with different vibration damping characteristics may be provided between two wall surfaces. According to the modification, desired damping characteristics can be realized according to combination of the plurality of vibration damping members.

(8) The vibration damping member according to the disclosure can be applied to an electronic musical instrument, acoustic equipment, an in-vehicle acoustic device, and so on having a box-shaped housing and emitting sound such as a portable keyboard in addition to acoustic devices such as the speaker and a subwoofer.

The present disclosure discloses a vibration damping member mounted to an inside of a housing of an acoustic device which includes a first member, a second member, and a third member, in which the first member and the second member are connected through the third member, and the third member has a lower elastic modulus than the first member and the second member.

The first member and the second member may respectively include a first facing area and a second facing area that face each other, and the third member may be disposed at a gap between the first facing area and the second facing area.

The third member may be a viscoelastic body.

An overall-length adjusting portion adjusting an overall length of the vibration damping member may be provided at at least one of the first member and the second member.

The first member and the second member may have a tubular shape, the first member may have a hollow area into which the second member is inserted, and the third member may be sandwiched between an inner wall surface of the first member in the hollow area and an outer wall surface of the second member inserted into the hollow area.

An opening may be provided at at least one of the first member and the second member.

The first member and the second member may have a plate shape, and the third member may be sandwiched between a plate surface of the first member and a plate surface of the second member.

The first member may be in contact with a first surface inside the housing, and the second member may be in contact with a second surface different from the one surface inside the housing.

The first member and the second member may be respectively in contact with the first surface and the second surface that face each other inside the housing.

The first member may be in contact with the first surface in the housing and the second member may be in contact with a second surface different from the one surface.

The first member and the second member may be respectively in contact with the first surface and the second surface that face each other inside the housing.

The present disclosure discloses an acoustic device including a housing, a speaker unit fixed to the housing, and a vibration damping member mounted to the inside of the housing, in which the housing has a first wall and a second wall different from the first wall which are walls defining the inside of the housing, and the vibration damping member includes a first member being in contact with the first wall, a second member being in contact with the second wall, and a third member connecting the first member and the second member and having a lower elastic modulus than the first member and the second member.

The first wall and the second wall may face each other.

The third member may connect the first member and the second member so as to allow a distance between the first wall with which the first member is in contact and the second wall with which the second member is in contact to change when the speaker unit operates.

The third member may be a viscoelastic body.

The first member and the second member may have a tubular shape, the first member may have a hollow area into which the second member is inserted, and the third member may be sandwiched between an inner wall surface of the hollow area in the first member and an outer wall surface of the second member inserted into the hollow area.

### EXPLANATION OF REFERENCE NUMERALS

1: Housing, SP: Speaker Unit, 1L,1R,1F,1B,161a: Wall, 100A, 100B, 100C, 100D, 100E, 100F, 100G: Vibration Damping Member, 101,111,121,131,141,151,161:First Member, 102,112,122,132,142,152,162:Second Member, 103,113,123,133,143: Third Member, 153a, 152a:Male Thread, 151a,154a:Female Thread, 153,154,163,164:Member For Extension, 161b,162b:Spring

## Claims

1. A vibration damping member mounted to an inside of a housing of an acoustic device, comprising:
a first member;
a second member; and
a third member;
wherein the first member and the second member are connected through the third member, and
wherein the third member has a lower elastic modulus than the first member and the second member.

2. The vibration damping member according to claim 1,
wherein the first member and the second member respectively include a first facing area and a second facing area that face each other, and
wherein the third member is disposed at a gap between the first facing area and the second facing area.

3. The vibration damping member according to claim 1 or 2,
wherein the third member is a viscoelastic body.

4. The vibration damping member according to any one of claims 1 to 3,
wherein an overall-length adjusting portion adjusting an overall length of the vibration damping member is provided at at least one of the first member and the second member.

5. The vibration damping member according to any one of claims 1 to 4,
wherein the first member and the second member have a tubular shape,
wherein the first member has a hollow area into which the second member is inserted, and
wherein the third member is sandwiched between an inner wall surface of first member in the hollow area and an outer wall surface of the second member inserted into the hollow area.

6. The vibration damping member according to claim 5,
wherein an opening is provided at at least one of the first member and the second member.

7. The vibration damping member according to any one of claims 1 to 4,
wherein the first member and the second member have a plate shape, and
wherein the third member is sandwiched between a plate surface of the first member and a plate surface of the second member.

8. The vibration damping member according to any one of claims 1 to 7,
wherein the first member is in contact with a first surface inside the housing, and
wherein the second member is in contact with a second surface inside the housing different from the one surface inside the housing.

9. The vibration damping member according to claim 8,
wherein the first member and the second member are respectively in contact with the first surface and the second surface that face each other inside the housing.

10. An acoustic device, comprising:
the vibration damping member according to any one of claims 1 to 7 in which the first member is in contact with a first surface inside the housing and the second member is in contact with a second surface inside the housing different from the first surface.

11. The acoustic device according to claim 10,
wherein the first member and the second member are respectively in contact with the first surface and the second surface that face each other inside the housing.

12. An acoustic device, comprising:
a housing;
a speaker unit fixed to the housing; and
a vibration damping member mounted to an inside of the housing,
wherein the housing includes a first wall and a second wall different from the first wall which are walls defining the inside of the housing, and
wherein the vibration damping member includes a first member being in contact with the first wall, a second member being in contact with the second wall, and a third member connecting the first member and the second member and having a lower elastic modulus than the first member and the second member.

13. The acoustic device according to claim 12,
wherein the first wall and the second wall face each other.

14. The acoustic device according to claim 12 or claim 13,
wherein the third member connects the first member and the second member so as to allow a distance between the first wall with which the first member is in contact and the second wall with which the second member is in contact to change when the speaker unit operates.

15. The acoustic device according to any one of claims 12 to claim 14, wherein the third member is a viscoelastic body.

16. The acoustic device according to any one of claims 12 to claim 15,
wherein the first member and the second member have a tubular shape,
wherein the first member has a hollow area into which the second member is inserted, and
wherein the third member is sandwiched between an inner wall surface of the first member in the hollow area and an outer wall surface of the second member inserted into the hollow area.
